# EUROPEAN PATENT APPLICATION

(11) **EP 0 547 992 A2**
(43) Date of publication of application: **23.06.1993**
(21) Application number: 92480174.9
(22) Date of filing: 19.11.1992
(51) Int. Cl.: G06F 15/419

(54) **Method and system for enhanced efficiency of data recovery in balanced tree memory structures**

(30) Priority: 17.12.1991 US 808699
(71) Applicant: INTERNATIONAL BUSINESS MACHINES CORPORATION, Armonk, N.Y. 10504 (US)
(72) Inventor: Keller, Robert S., Grapevine, TX 76051 (US); Mitchell, Michael O., Trophy Club, TX 76262 (US); Stringfellow, Dale B., Jr., Irving, TX 75063 (US); Williams, Marvin L., Lewisville, TX 75067 (US)
(74) Representative: de Pena, Alain

(57) **Abstract**

A method and system for enhancing the efficiency of data recovery in a multilevel balanced tree memory structure having a root node and multiple leaf nodes stored within a data processing system. After checking to determine if the multilevel balanced tree memory structure is of sufficient size and complexity to warrant optimization, and after determining that sufficient memory space is available within the data processing system, the entire multilevel balanced tree memory structure is recopied within the data processing system utilizing a post order visitation process. This process is accomplished in a manner such that adjacent leaves are as closely located as possible within memory, thereby minimizing the amount of memory which must be traversed during a data search. In one embodiment of the present invention, a virtual memory data processing system is utilized and the entire multilevel balanced tree memory structure is recopied in a manner such that as many adjacent leaves as possible are stored within each page of memory therein.

## Description

The present invention relates in general to improved data recovery within a data processing system and in particular to a method and system for enhancing data recovery in a balanced tree memory structure in a data processing system. Still more particularly, the present invention relates to a method and system for enhancing data recovery in a balanced tree memory structure in a data processing system by minimizing the amount of memory which must be traversed during data recovery.

Data processing systems often utilize so-called "tree" structures for data storage. A "tree" structure is a structure containing a "root" node and a plurality of "leaf' nodes in which there is exactly one path between any two nodes within the tree. Such structures may be efficiently searched to recover data stored therein. This is particularly true for tree structures which are "balanced," that is, a tree structure in which all but the more bottom nodes are completely filled. It generally requires "N" probes to completely search a balanced tree structure which includes the 2N - 1 entries. As a consequence, many different algorithms have been established for creating tree structures in a manner which ensures that the tree structure is balanced. One example of such an algorithm is Donald Knuth's AVL (Adelson-Velskii and Landis) balanced tree Theorem "A" as set forth in Knuth's Sorting and Searching, Addison Wesley Publishing Co., 1973.

While it is now commonplace for tree memory structures to be created in a balanced state, this balancing often results in tree memory structures in which adjacent leaf nodes within a tree are located in non-adjacent memory locations. This has a particularly deletorious effect in virtual memory data processing systems, such as International Business Machines Corporation's VM and MVS systems, wherein fixed-length blocks of memory referred to as "pages" are utilized. Each probe of a tree memory structure in a virtual memory data processing system may result in an associated page fault, greatly increasing the amount of time and processor assets required to retrieve data within the tree memory structure.

It should therefore be apparent that the efficiency of data retrieval in a multilevel balanced tree memory structure may be greatly enhanced by eliminating as many page faults as possible which are encountered during a data probe.

It is therefore one object of the present invention to provide an improved method of data recovery in a data processing system.

It is another object of the present invention to provide an improved method and system for enhancing data recovery in a balanced tree memory structure within a data processing system.

It is yet another object of the present invention to provide an improved method and system for enhancing data recovery in a balanced tree memory structure within a data processing system by minimizing the amount of memory which must be traversed during data recovery.

The foregoing objects are achieved as is now described. A multilevel balanced tree memory structure is provided having a root node and multiple leaf nodes. The multilevel balanced tree memory structure is stored within a data processing system. After checking to determine if the tree memory structure is of sufficient size and complexity to warrant optimization, and after determining that sufficient memory space is available within the data processing system, the entire multilevel balanced tree memory structure is recopied within the data processing system utilizing a post order visitation process. This process is accomplished in a manner such that adjacent leaves are as closely located as possible within memory, thereby minimizing the amount of memory which must be traversed during a data search. In one embodiment of the present invention, a .virtual memory data processing system is utilized and the entire multilevel balanced tree memory structure is recopied in a manner such that as many adjacent leaves as possible are stored within each page of memory therein.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 depicts a pictorial representation of a distributed data processing system which may be utilized to implement the method and system of the present invention;
Figure 2 is a pictorial representation of a multilevel balanced tree memory structure which may be implemented within the distributed data processing system of Figure 1;
Figure 3 is a pictorial representation of the multilevel balanced tree memory structure of Figure 2, depicting memory page locations for each node therein which may occur as a result of balancing during creation of the multilevel balanced tree memory structure;
Figure 4 is a pictorial representation of the multilevel balanced tree memory structure of Figure 2, depicting memory page locations for each node therein which may occur as a result of tree creation after ordering the input data;
Figure 5 is a pictorial representation of the multilevel balanced tree memory structure of Figure 2 depicting memory page locations for each node therein after utilization of the method and system of the present invention;
Figure 6 is a high level logic flowchart illustrating a software implementation of a pre-processing operation which may be utilized with the method and system of the present invention; and
Figure 7 is a high level logic flowchart illustrating a software implementation of the method and system of the present invention.

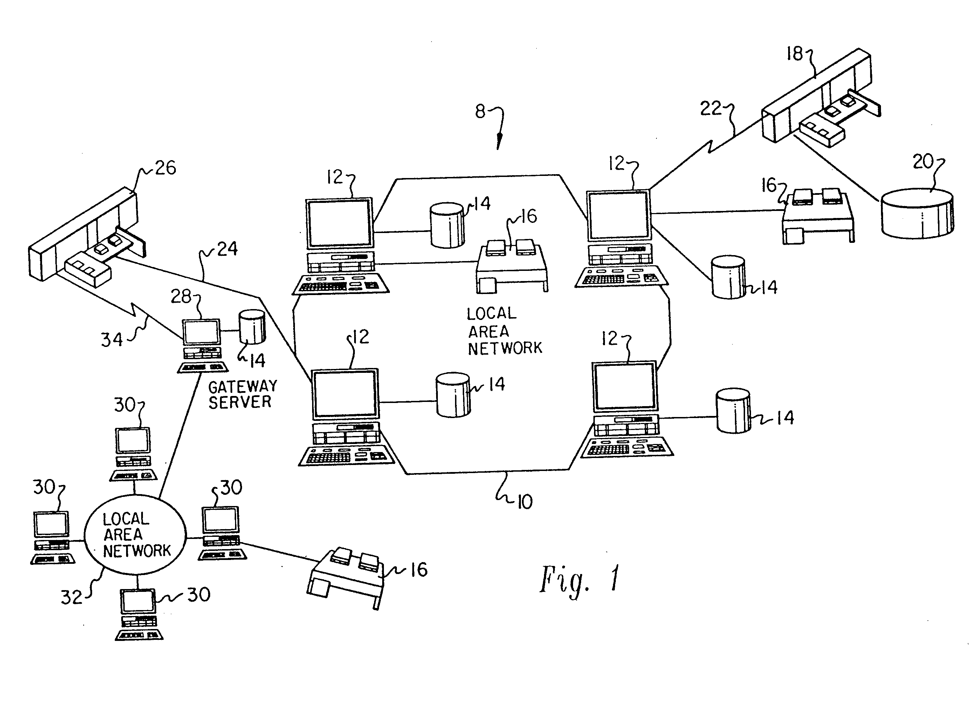

With reference now to the figures and in particular with reference to Figure 1, there is depicted a pictorial representation of a distributed data processing system 8 which may be utilized to implement the method and system of the present invention. As may be seen, distributed data processing system 8 may include a plurality of networks, such as Local Area Networks (LAN) 10 and 32, each of which preferably includes a plurality of individual computers 12 and 30, respectively. Of course, those skilled in the art will appreciate that a plurality of Intelligent Work Station (IWS) coupled to a host processor may be utilized to implement each such network.

As is common in such data processing systems, each individual computer may be coupled to a storage device 14 and/or a printer/output device 16. One or more such storage devices 14 may be utilized, in accordance with the method and system of the present invention, to store data within a tree memory structure which may be periodically accessed by a user having access to that data in a data processing system. Further, one or more such storage devices 14 may be utilized, as will be explained in greater detail herein, to store the software routines which are utilized to implement the method and system of the present invention.

Still referring to Figure 1, it may be seen that distributed data processing system 8 may also include mainframe computers, such as mainframe computer 18, which may be preferably coupled to Local Area Network (LAN) 10 by means of communications link 22. Mainframe computer 18 may be coupled to a storage device 20 which may serve as remote storage for Local Area Network (LAN) 10 and may be coupled via communications controller 26 and communications link 34 to gateway server 28. Gateway server 28 is preferably an individual computer or Intelligent Work Station (IWS) which serves to link Local Area Network (LAN) 32 to Local Area Network (LAN) 10.

As discussed above with respect to Local Area Network (LAN) 32 and Local Area Network (LAN) 10, a plurality of tree memory structures may be stored within storage device 20 and controlled by mainframe computer 18, as Resource Manager or Library Service for the data thus stored. In the depicted embodiment of the present invention such are preferably stored and maintained in a multilevel balanced binary tree memory structure. Those skilled in the art will appreciate that it is often desirable to maintain a database at a central location within a distributed data processing system wherein users throughout the distributed data processing system may access objects or documents stored therein.

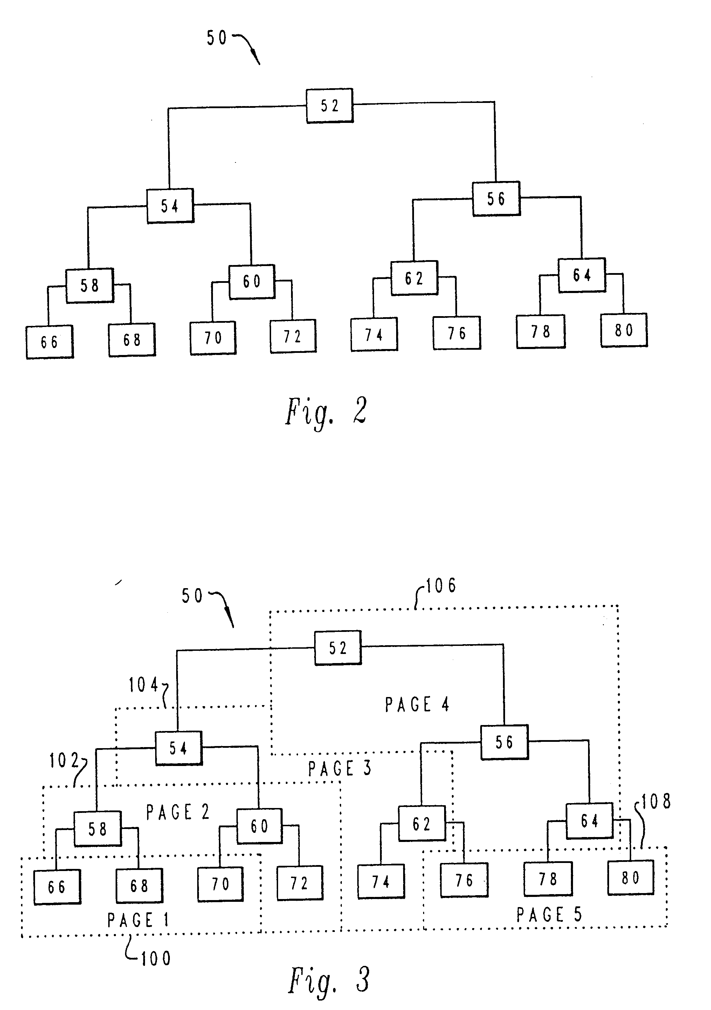

Referring now to Figure 2, there is depicted a pictorial representation of a multilevel balanced tree memory structure 50, which may be implemented within distributed data processing system 8 of Figure 1. As illustrated, multilevel balanced tree memory structure 50 includes a root node 52 and a plurality of leaf nodes 54-80. As illustrated within Figure 2, the reference numeral associated with each node within balanced tree memory structure 50 is located within a pictorial representation of a node. As is common in such tree structures, it will be noted that there exists exactly one path between any two nodes within balanced tree memory structure 50 and each node preferably includes a left and right link, which point to nodes at successively lower levels within balanced tree memory structure 50.

With reference now to Figure 3, there is depicted a pictorial representation of multilevel balanced tree memory structure 50 of Figure 2, depicting memory page locations for each node therein which may occur as a result of balancing during creation of multilevel balanced tree memory structure 50. Each of the nodes depicted within Figure 3 includes an identical reference numeral to that utilized within the description of Figure 2. For purposes of illustration, multilevel balanced tree memory structure 50 within Figure 3 is assumed to be implemented within virtual memory in a data processing system and, for purposes of simplicity this description assumes that only three leaf nodes of multilevel balanced tree memory structure 50 may be stored within a single page of memory within the virtual memory system.

Thus, it may be seen that leaf nodes 66, 68 and 70 are stored within the memory page indicated at reference numeral 100, while nodes 58, 60, and 72 are stored within the memory page indicated at reference numeral 102. Similarly, nodes 54, 62 and 74 are stored within the memory page indicated at reference numeral 104 while nodes 52, 56 and 64 are stored within the memory page indicated at reference numeral 106. Finally, nodes 76, 78 and 80 are illustrated as stored within the memory page indicated at reference numeral 108.

Upon reference to Figure 3 those skilled in the art will appreciate that since the number of nodes within multilevel balanced tree memory structure 50 equals fifteen, the structure may be completely probed utilizing four probes. However, it may also be seen upon reference to Figure 3 that the number of page faults which may occur can equal the number of probes needed to accomplish a search. That is, a search probe preceding from node 52 through node 54, node 58 and node 66 will encounter four different pages during that process.

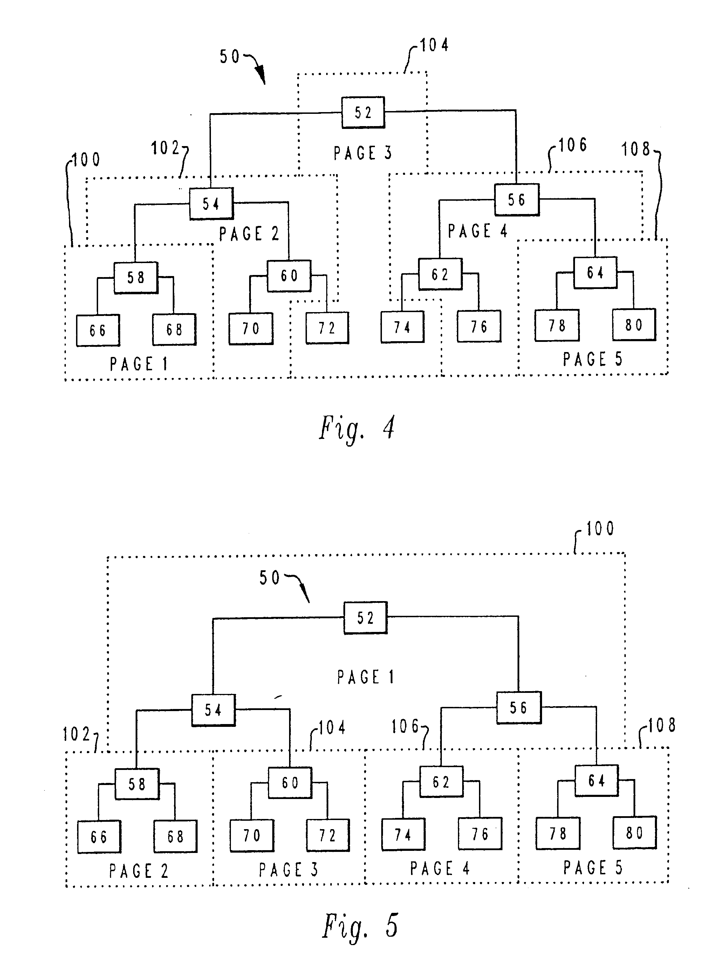

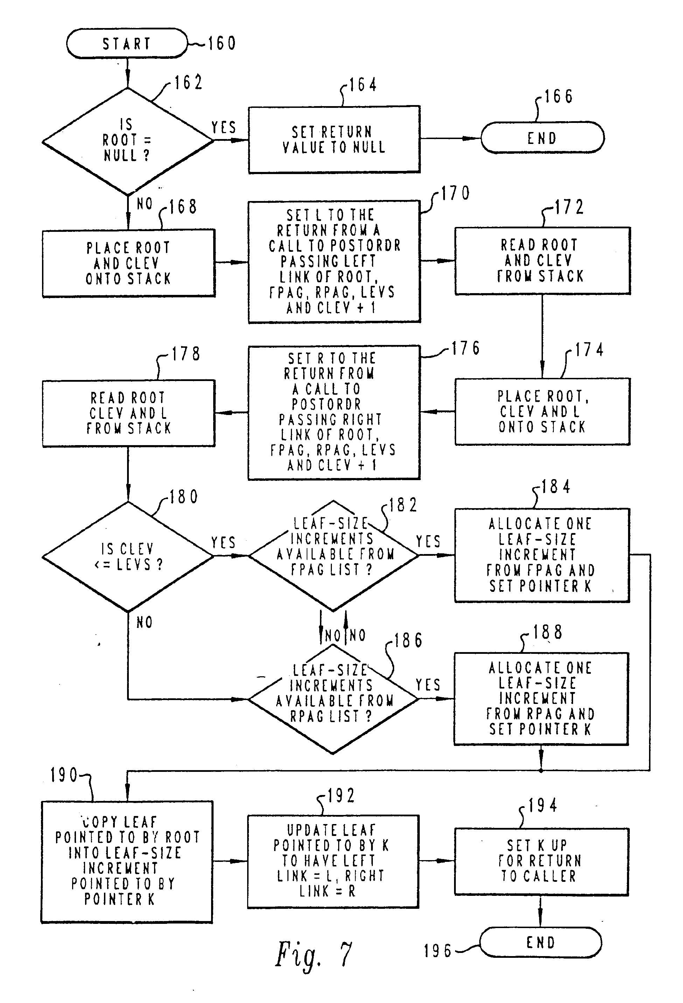

Referring now to Figure 4, there is illustrated a pictorial representation of multilevel balance tree memory structure 50 of Figure 2, depicting memory page locations for each node therein which may occur as a result of tree creation after ordering the input data. Thus, it may be seen that nodes 58, 66 and 68 are stored within the memory page indicated at reference numeral 100, while nodes 54, 60 and 70 are stored within the memory page indicated at reference numeral 102. Similarly, nodes 52, 72 and 74 are stored within the memory page indicated at reference numeral 104, while nodes 56, 62 and 76 are stored within the memory page indicated at reference numeral 106. Finally, nodes 64,78 and 80 are stored within the memory page indicated at reference numeral 108.

Upon reference to the foregoing those skilled in the art will appreciate that while four probes may still be necessary to completely search multilevel balanced tree memory structure 50, a maximum of three page faults may occur during such a search. That is, a search probe from node 52 through node 54 to any of the nodes stored at the memory page indicated at reference numeral 100 will still require three page faults. While this represents an improvement overthe semi-random allocation of nodes within memory pages which is generally created during a process which creates a balanced memory tree, the process of ordering the input during the creation of a tree can require a substantial amount of time and processor assets, if a large amount of input data is utilized.

Next, with reference to Figure 5, there is depicted a pictorial representation of multilevel balanced tree memory structure 50 of Figure 2 depicting memory page locations for each node therein after utilization of the method and system of the present invention. As illustrated, each page within virtual memory still includes only three nodes; however, the number of page faults encountered during any probe of the structure is substantially reduced. This is accomplished by storing nodes 52, 54 and 56 within the memory page indicated at reference numeral 100, while storing nodes 58, 66 and 68 within the memory page indicated at reference numeral 102. Nodes 60, 70 and 72 are stored within the memory page indicated at reference numeral 104, while nodes 62, 74 and 76 are stored within the memory page indicated at reference numeral 106. Finally, nodes 64, 78 and 80 are stored within a memory page indicated at reference numeral 108.

Upon reference to the foregoing, those skilled in the art will appreciate that while the maximum number of probes needed to search multilevel balanced tree memory structure 50 is still four, the maximum number of virtual memory pages referenced during any search is now two. This optimum node/memory page arrangement may be created automatically and efficiently utilizing the method and system of the present invention in a manner which will be explained in greater detail below.

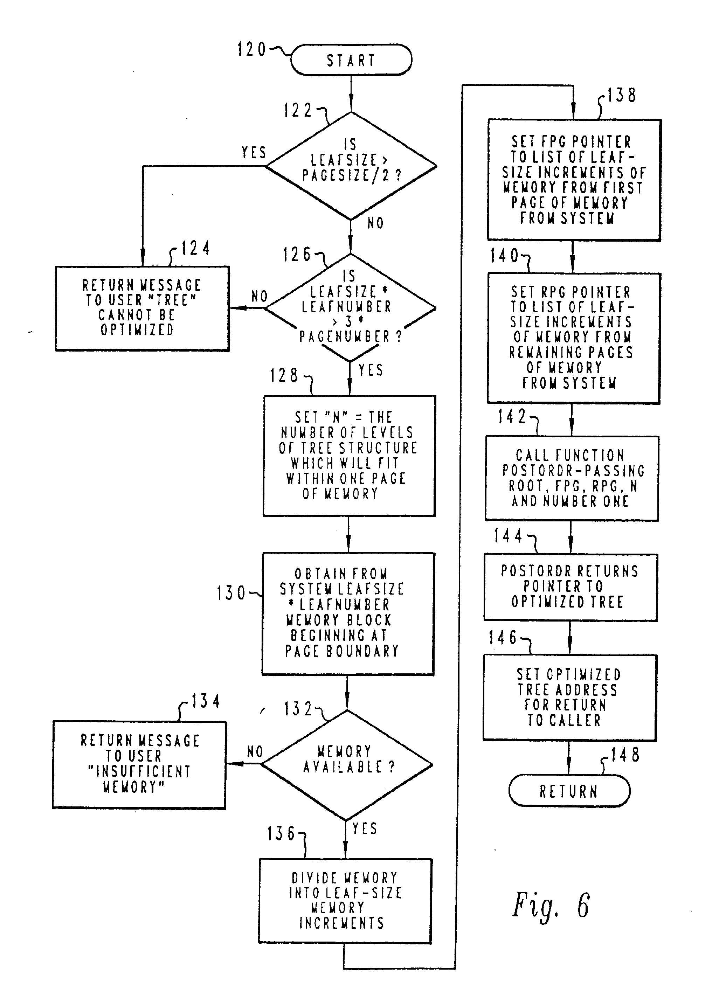

Referring now to Figure 6, there is depicted a high level logic flowchart illustrating a software implementation of a pre-processing operation which may be utilized with the method and system of the present invention. As illustrated, the process begins at block 120 and thereafter passes to block 122. Block 122 illustrates a determination of whether or not the size of each leaf within a multilevel balanced tree memory structure is greater than or equal to one-half the size of a page of memory within the virtual memory data processing system utilized to implement the tree memory structure in accordance with the present invention. If this is true, those skilled in the art will appreciate that a page of memory will be required for each leaf within the tree structure and optimization is therefore not possible. In this case, the process passes to block 124 which illustrates the prompting of the userwith a message indicating that the tree structure cannot be optimized.

Referring again to block 122, in the event more than two leaf nodes of the tree structure may be stored within a single page of memory, the process passes to block 126. Block 126 illustrates a determination of whether or not the size of each leaf node within the tree structure times the total number of leaf nodes is greater than three times the size of each page of memory within the data processing system. If this is not true, the tree structure is simply not sufficiently complex to warrant optimization and the process once again passes to block 124, indicating to the user that the tree cannot be optimized. Referring again to block 126, in the event the tree is sufficiently large and complex to warrant optimization, the process passes to block 128.

Block 128 illustrates the assigning of a parameter "N," which is the number of levels of the tree structure which will fit into one page of memory within the data processing system. Thereafter, the process passes to block 130 which depicts the obtaining from the data processing system of an amount of memory equal to the size of each leaf node within the tree structure times the number of leaf nodes within the tree structure. Preferably, the memory provided by the system will begin on a page boundary within a virtual memory system.

Thereafter, the process passes to block 132, which illustrates a determination of whether or not sufficient memory was available. If not, the process passes to block 134, which illustrates the transmittal of a message to the user that the tree structure cannot be optimized due to a lack of memory in the data processing system.

Referring again to block 132, in the event sufficient memory was available, the process passes to block 136. Block 136 illustrates the dividing of each page of memory obtained from the system into leaf-sized increments. The process then passes to block 138 which illustrates the setting of a "FPG" pointer to the list of leaf-size increments of memory from the first page of memory obtained from-the data processing system. Thereafter, the process passes to block 140 which illustrates the setting of a pointer "RPG" which points to the list of leaf-size increments of memory from all other pages of memory obtained from the data processing system.

After performing each of these pre-processing steps, block 142 illustrates the calling of the function "POSTORDR," passing to that function an identification of the root of the tree structure, the location of the FPG pointer, the location of the RPG pointer, the number of levels of the binary tree which will fit within one page of memory provided by the system and the number one. Thereafter, as illustrated at block 144, the function POSTORDR returns a pointer which is the address of the root of the new optimized tree. The process then passes to block 146, which illustrates the setting of the address for the new tree for utilization by the user. Thereafter, as depicted at block 148, the process terminates.

With reference now to Figure 7, there is depicted a high level logic flowchart illustrating a software implementation of the method and system of the present invention. Figure 7 illustrates the function POSTORDR and begins, as illustrated, at block 160. POSTORDR is a recursive routine which receives, as it is initiated, an identification of the root of the tree structure or the base of the subtree which is to be optimized. This parameter is identified within the flowchart as "ROOT." Additionally, the routine receives the parameter "FPAG" which is a list of leaf-sized increments of memory from the first page of memory obtained from the system. Similarly, a parameter "RPAG" is provided and represents a list of leaf-size increments from all remaining pages of memory obtained from the system. Finally, the parameter "LEVS" and "CLEV" are provided which depict the number of levels from the root of the tree structure which will fit within one page of memory and the current level within the tree structure at which the leaf indicated by the parameter ROOT is located, respectively.

Referring again to the flowchart, the process then passes to block 162 which depicts a determination of whether or not the parameter ROOT is null, indicating no value is provided. If so, the process passes to block 164 which indicates the setting of the return value to null and the process then returns, as depicted in block 166.

Referring again to block 162, in the event the value of the parameter ROOT is not null, the process passes to block 168. Block 168 depicts the placement of the parameters ROOT and CLEV onto the stack and the process then passes to block 170. Block 170 depicts the setting of a parameter L to the return from a call to the routine POSTORDR, passing the left link of the node identified by the parameter ROOT and the parameters FPAG, RPAG, LEVS and CLEV + 1. This is a recursive call within the routine POSTORDR and continues to traverse the left links of tree structure until such time as a null value is returned for the node identified by the parameter ROOT. Thereafter, after processing this recursive call, the process passes to block 172.

Block 172 illustrates the retrieval of the parameters ROOT and CLEV from the stack and the process then passes to block 174 which depicts the placement of the parameters ROOT, CLEV and L onto the stack. Next, the process passes to block 176 for a second recursive call.

Block 176 depicts the setting of the parameter R to the return from a call to the POSTORDR routine, passing the right link of the node identified by the parameter ROOT and the parameters FPAG, RPAG, LEVS, and CLEV + 1. Thereafter, this process evaluates the right link of the node identified by the parameter ROOT until such time as a null values is returned. Thereafter, upon a return, the process passes to block 178 which depicts the retrieval of the parameter's ROOT, CLEV and Lfrom the stack.

Next, the process passes to block 180 which illustrates a determination of whether or not the current level (CLEV) within the tree structure, indicated by the parameter ROOT, is less than or equal to the parameter LEVS, indicating the number of levels which will fit within one page of memory. lf t h is is true, indicating that the current level is at or near the top of the tree structure, the process passes to block 182. Block 182 illustrates a determination of whether or not any leaf-size increments of memory are available from the list of leaf-size increments of memory indicated by the parameter FPAG. If so, the process passes to block 184 and one leaf-size increment from the first page of memory previously obtained from the system (FPAG) is allocated and a pointer K is utilized to indicate that leaf-size increment of memory. Referring again to block 182, in the event no leaf-size increments of memory are available within the first page of memory obtained from the system, the process passes to block 186 which illustrates a determination of whether or not any leaf-size increments of memory are available from the remaining pages of memory previously obtained from the system (FPAG), as listed at the parameter RPAG. If so, the process passes to block 188 which illustrates the allocation of one leaf-size increment of memory from the list of leaf-size increments of memory contained within the remaining pages of memory obtained from the system, and the pointer K is utilized to indicate that leaf-size increment.

Referring again to block 180, in the event the current level at which the leaf indicated by the parameter ROOT is located is not less than or equal to the number of levels which will fit in one page of memory, the process passes directly to block 186. Those skilled in the art, upon a review of the foregoing, will appreciate that this process automatically assigns a memory location within the first page of memory obtained from the system to those nodes within the tree structure which are located at or near the root node. Thereafter, leaf-size increments of memory are assigned to each node within. the tree structure from the remaining pages of memory provided by the system in a manner which consistently allocates adjacent memory locations to leaves which are adjacent within the tree structure.

After allocating a leaf-size increment of memory for the particular node currently under examination, within either block 184 or block 188, the process passes to block 190. Block 190 depicts the copying of the leaf pointed by the parameter ROOT into the leaf-size increment of memory pointed to by the pointer K. The process then passes to block 192 which illustrates the updating of the leaf node pointed to by the pointer K to have a left link identified by the parameter L and a right link identified by the parameter R. The process then passes to block 194 which depicts the setting of the pointer Kfor return to the caller and the process returns, as depicted at block 196.

Upon reference to the foregoing those skilled in the art will appreciate that the Applicants herein have provided a novel and unobvious method for enhancing the efficiency of data recovery within a data processing system by providing a method and system whereby tree memory structures may be periodically recopied into a second memory area wherein as many adjacent nodes within the tree structure as possible are stored within adjacent memory locations, thereby minimizing the number of page faults which may occur upon a probe of the memory structure. Applicants' studies have shown that page fault reductions on the order of greater than 60% may be obtained by optimizing tree structures having a large number of index items.While the depicted embodiment of the present invention illustrates a tree structure stored within a virtual memory data processing system, those skilled in the art will appreciate that the present invention will find application within other memory systems, such as disk memory systems, tape memory systems or the like.

## Claims

1. A method of enhancing the efficiency of data recovery from a multilevel balanced binary tree memory structure having a plurality of leaves stored in a first memory area within a data processing system, said method comprising the step of:
periodically recopying all of said multilevel balanced binary tree memory structure into a second memory area within said data processing system such that a maximum number of adjacent ones of said plurality of leaves are stored within substantially adjacent memory areas, wherein data recovery is substantially enhanced.

2. The method according to Claim 1, wherein said multilevel balanced binary memory tree structure is stored in a virtual memory system within a data processing system and wherein a maximum number of adjacent ones of said plurality of leaves are stored within each single page of memory within said virtual memory system.

3. The method according to Claim 2, further including the step of determining if at least two of said plurality of leaves may be stored within each single page of memory within said virtual memory system prior to recopying all of said multilevel balanced binary tree memory structure.

4. The method according to Claim 1, further including the step of determining if said second memory area includes sufficient area to store all of said multi level balanced binary tree memory structure.

5. The method of enhancing the efficiency of data recovery from a multilevel balanced binary tree memory structure according to Claim 1, wherein said step of periodically recopying all of said multilevel balanced binary tree memory structure into a second memory area within said data processing system further includes performing a post order visitation of each of said plurality of leaves during said recopying.

6. A virtual memory data processing system for enhancing data recovery from a multilevel balanced binary tree memory structure having a plurality of leaves stored in a first plurality of memory pages within said virtual memory data processing system, said virtual memory data processing system comprising:
means for determining if a second plurality of memory pages within said virtual memory data processing system may be utilized to store said multilevel balanced binary tree memory structure; and
means for recopying all of said multilevel balanced binary tree memory structure into said second plurality of memory pages such that a maximum number of adjacent ones- of said plurality of leaves are stored within each single page of memory.

7. The system according to Claim 6, further including means for determining if at least two of said plurality of leaves may be stored within each single page of memory within said virtual memory data processing system.

8. The system according to Claim 6, wherein said means for recopying all of said multilevel balanced binary tree memory structure into said second plurality of memory pages further includes means for performing a post order visitation of each of said plurality of leaves during said recopying.

9. Adata processing program product for enhancing data recovery from a multilevel balanced binary tree memory structure having a plurality of leaves stored in a first plurality of memory pages within a virtual memory data processing system, said data processing program product comprising:
instruction means for determining if a second plurality of memory pages within said virtual memory data processing system may be utilized to store said multilevel balanced binary tree memory structure; and
instruction means for recopying all of said multilevel balanced binary tree memory structure into said second plurality of memory pages such that a maximum number of adjacent ones of said plurality of leaves are stored within each single page of memory.
